# FASCICULE DE BREVET EUROPEEN

(11) **EP 3 849 856 B1**
(45) Date de publication et mention de la délivrance du brevet: **03.08.2022**
(21) Numéro de dépôt: 19742062.3
(22) Date de dépôt: 24.07.2019
(51) Int. Cl.: B60S 1/24, F16C 11/06

(54) **ENSEMBLE POUR LA LIAISON ARTICULÉE D'UNE BIELLE ET D'UN MANETON D'UN MÉCANISME D'ESSUYAGE DE VITRE DE VÉHICULE AUTOMOBILE**
ANORDNUNG ZUR GELENKIGEN VERBINDUNG EINER PLEUELSTANGE UND EINES PLEUELZAPFENS EINES KRAFTFAHRZEUGSCHEIBENWISCHERMECHANISMUS
ASSEMBLY FOR THE ARTICULATED CONNECTION OF A CONNECTING ROD AND A CRANKPIN OF A MOTOR VEHICLE WINDOW WIPING MECHANISM

(30) Priorité: 10.09.2018 FR 1858106
(43) Date de publication de la demande: 21.07.2021
(73) Titulaire: Valeo Systèmes d'Essuyage, 78322 Le Mesnil Saint Denis (FR)
(72) Inventeur: RENOUX, Pascal, 63500 ISSOIRE (FR); KUCHLY, Nicolas, 63500 ISSOIRE (FR); VIARD, Robin, 63500 ISSOIRE (FR); ROUSSEL, Loic, 63500 ISSOIRE (FR)
(74) Mandataire: Valeo Visibility
(86) Numéro de dépôt international: PCT/EP2019/069880
(87) Numéro de publication internationale: WO 2020/052844

(56) Documents cités:
- WO-A1-2014/198562
- FR-A1- 2 228 172
- FR-A1- 2 608 233
- FR-A1- 2 630 068

## Description

### DOMAINE TECHNIQUE DE L'INVENTION

L'invention concerne un ensemble appartenant à un mécanisme de transmission de mouvement pour l'entraînement en rotation d'un essuie-glace de véhicule automobile dans lequel une boîte à rotule une bielle de transmission de mouvement sont assemblés par un montage à baïonnette.

### ARRIERE PLAN TECHNIQUE DE L'INVENTION

L'invention concerne un agencement pour l'articulation d'une extrémité d'une bielle avec une extrémité d'une manivelle par une liaison à rotule.

La bielle et la manivelle sont deux composants d'une tringlerie d'un mécanisme d'essuyage pour véhicule automobile.

Un tel mécanisme assure notamment une transmission de mouvement et est du type comportant un arbre tournant lié en rotation à la première extrémité d'une manivelle dont la seconde extrémité porte un maneton qui est prévu pour être relié à une bielle, par exemple une bielle motrice, appartenant à une timonerie de transmission de mouvement pour l'entraînement en rotation d'un essuie-glace de véhicule automobile.

La conception de l'ensemble comportant la manivelle, le maneton qui s'étend selon une direction générale axiale globalement orthogonale au plan dans lequel s'étend la manivelle, et l'arbre tournant qui s'étend lui aussi selon une direction générale axiale globalement orthogonale au plan dans lequel s'étend la manivelle, est telle que le maneton et l'arbre portant sont liés en rotation à la manivelle et fixés à cette dernière de manière fiable.

Concernant par exemple la liaison maneton-manivelle un tronçon axial (44) du maneton est reçu axialement à travers un trou complémentaire de la manivelle et il est immobilisé axialement par rapport à la manivelle, par exemple monté par sertissage dans le trou complémentaire.

Le maneton et la manivelle forment ainsi un sous-ensemble structurel. La liaison manivelle-arbre d'entraînement peut aussi répondre à la même conception.

Un tel mécanisme comporte un agencement pour la liaison d'une extrémité de la bielle avec une extrémité de la manivelle associée.

De manière connue, par exemple du document FR--A1-2.911.649, l'agencement peut comporter :
- un maneton qui est monté sur l'extrémité de la manivelle, qui s'étend suivant son axe principal depuis l'extrémité de la manivelle jusqu'à l'extrémité de la bielle associée, et dont l'extrémité libre du maneton est conformé en une sphère d'articulation ;
- un composant d'assemblage et de liaison appelé « boîte à rotule » qui est porté par l'extrémité de la bielle et qui délimite un logement sphérique concave à l'intérieur duquel la sphère d'extrémité libre du maneton est reçue libre en rotation.

La boîte à rotule est réalisée en matériau plastique déformable élastiquement, pour permettre un emboîtement élastique de la sphère d'extrémité libre du maneton dans le logement de la boîte à rotule.

La bielle et la manivelle sont ainsi articulées l'une par rapport à l'autre par l'intermédiaire d'une liaison du type à rotule.

Un tel agencement est par exemple associé à un palier associé à une bielle de transmission de mouvement reliant deux paliers associés à un motoréducteur d'entraînement commun à deux essuie-glaces d'un mécanisme d'essuyage pour véhicule automobile.

De manière connue, pour assembler la bielle et la boîte à rotule on peut faire appel à un ensemble dans lequel la boîte à rotule et la bielle sont assemblés par un montage à baïonnette, et dans lequel :
- la bielle comporte un trou de verrouillage qui est traversé axialement, de bas en haut, par un tronçon axial intermédiaire de la boîte à rotule ;
- la bielle comporte au moins un ergot de verrouillage appartenant au montage à baïonnette ;
- la boîte à rotule comporte une gorge radiale de verrouillage, appartenant au montage à baïonnette qui est délimitée par deux faces radiales opposées ;
- la boîte à rotule est verrouillée en position axiale par rapport à la bielle par rotation relative de la boîte à rotule par rapport à la bielle par engagement dudit au moins un ergot de verrouillage dans la gorge radiale de verrouillage.

Le montage à baïonnette s'effectue ainsi en effectuant une combinaison de mouvements relatifs consécutifs « pousser-tourner » de la bielle par rapport à la boîte à rotule.

Un exemple est illustré dans le document FR-A1-2.630.068.

L'invention vise à proposer un ensemble perfectionné appartenant à un mécanisme de transmission de mouvement pour l'entraînement en rotation d'un essuie-glace de véhicule automobile, cet ensemble comprenant un maneton, d'orientation axiale, qui comporte une rotule d'articulation, et une bielle qui porte une boîte à rotule qui loge la rotule d'articulation, ensemble dans lequel la boîte à rotule et la bielle sont assemblés par un montage à baïonnette du type mentionné précédemment.

### BREF RESUME DE L'INVENTION

L'invention propose un ensemble appartenant à un mécanisme de transmission de mouvement pour l'entraînement en rotation d'un essuie-glace de véhicule automobile, cet ensemble comprenant un maneton, d'orientation axiale, qui comporte une rotule d'articulation, et une bielle qui porte une boîte à rotule qui loge la rotule d'articulation, ensemble dans lequel la boîte à rotule et la bielle sont assemblés par un montage à baïonnette, et dans lequel :
- la bielle comporte un trou de verrouillage qui est traversé axialement, de bas en haut, par un tronçon axial de la boîte à rotule ;
- la bielle comporte au moins un ergot de verrouillage ;
- la boîte à rotule comporte un cran de verrouillage qui est délimitée par deux faces radiales opposées ;
- la boîte à rotule est verrouillée en position axiale par rapport à la bielle par rotation relative de la boîte à rotule par rapport à la bielle par engagement dudit au moins un ergot de verrouillage dans le cran de verrouillage,
caractérisé en ce que une des deux faces radiales opposées du cran de verrouillage et une face en vis-à-vis de l'ergot de verrouillage présentent chacune un profil incliné complémentaire pour, lors de ladite rotation, provoquer un serrage axial de l'ergot de verrouillage à l'intérieur du cran de verrouillage.

Selon d'autres caractéristiques de l'invention :
- la face latérale convexe dudit tronçon de la boîte à rotule et la paroi interne concave du trou de verrouillage présentent un profil tronconique complémentaire pour, lors dudit serrage axial, permettre un rattrapage des jeux entre l'axe dudit tronçon de la boîte à rotule et l'axe du trou de verrouillage de la bielle ;
- dans une position angulaire dans laquelle ledit au moins un ergot de verrouillage est engagé dans le cran de verrouillage, la boîte à rotule est bloquée en position angulaire par rapport à la bielle par emboîtement élastique d'un doigt de blocage dans une encoche de blocage ;

- le doigt de blocage est porté par une patte déformable élastiquement qui est reliée à la boîte à rotule, et l'encoche de blocage est formée dans la bielle ;
- le doigt de blocage s'étend selon une direction parallèle à l'axe de rotation de la boîte à rotule par rapport à la bielle ;
- le doigt de blocage et l'encoche de blocage présentent un profil complémentaire pour, en position angulaire verrouillée de la boîte à rotule par rapport à la bielle, réaliser un rattrapage des jeux angulaires entre ces deux éléments ;
- la boîte à rotule comporte un tronçon supérieur de préhension pour l'entraînement en rotation de la boîte à rotule par rapport à la bielle qui comporte un corps central et deux ailes radiales qui s'étendent depuis le corps central ;
- le contour latéral externe du tronçon supérieur de préhension de la boîte à rotule est complémentaire du contour interne du trou de verrouillage, de manière à permettre l'introduction axiale de bas en haut du tronçon supérieur de préhension de la boîte à rotule à travers le trou de verrouillage;
- la boîte à rotule comporte une plaque annulaire inférieure dont la face supérieure constitue une des deux faces radiales opposées du cran de verrouillage de manière à permettre l'introduction axiale de bas en haut du tronçon supérieur de la boîte à rotule à travers le trou de verrouillage jusqu'à la venue en appui axial de vers le bas de la bielle contre ladite face supérieure ;
- le cran de verrouillage est délimitée axialement :
   -- vers le bas par ladite face supérieure de la plaque annulaire inférieure ;
   -- et vers le haut par une face inférieure en vis-à-vis du tronçon supérieur de la boîte à rotule constituée de deux portions angulaires dont chacune est la face inférieure d'une aile radiale.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une représentation partielle en perspective éclatée d'un agencement comportant une manivelle associée à un maneton, une boîte à rotule et une bielle complémentaires selon l'invention ;
- la figure 2 est vue en perspective des éléments représentés à la figure 1 qui illustre une étape du montage du type à baïonnette de la bielle sur la boîte à rotule ;
- la figure 3 est une vue de détail en perspective de dessous de l'extrémité de la bielle comportant le trou de verrouillage ;
- la figure 4 est une vue de détail en perspective de dessous de l'extrémité de la bielle munie de la boîte à rotule en position montée et bloquée angulairement ;
- la figure 5 est une vue de dessus des éléments illustrés à la figure 4 ;
- la figure 6 est une vue en coupe selon la ligne 6-6 de la figure 5 ;
- la figure 7 est une vue longitudinale en bout selon la flèche F de la figure 5 ;
- la figure 8 est une vue longitudinale en bout de la boîte à rotule illustrée aux figures 5 à 7 ;
- la figure 9 est une vue de dessus de la boîte à rotule illustrée aux figures précédentes ;

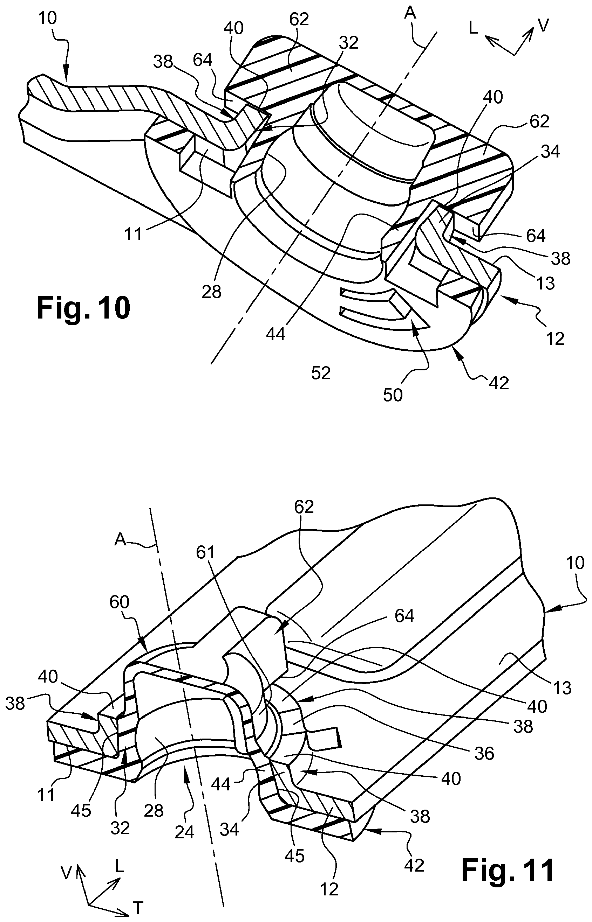

- la figure 10 est une vue en perspective et en coupe selon la ligne 10-10 de la figure 5 ; et
- la figure 11 est une vue en perspective et en coupe selon la ligne 11-11 de la figure 5.

### DESCRIPTION DETAILLEE DES FIGURES

Dans la suite de la description, des éléments présentant une structure identique ou des fonctions analogues seront désignés par des mêmes références.

Dans la suite de la description, on adoptera de manière non limitative et sans référence à la gravité terrestre, des orientations longitudinale, verticale et transversale indiquées par le trièdre "L,V,T" des figures. On définit aussi un plan horizontal qui s'étend longitudinalement et transversalement.

Un système d'entraînement en rotation d'essuie-glaces (non représentés) comprend notamment un motoréducteur (non représenté) comportant un arbre de sortie qui constitue un arbre d'entraînement pour un essuie-glace (non représenté), une bielle 10 de transmission du mouvement de rotation de l'arbre de sortie du motoréducteur à un autre arbre d'entraînement en rotation d'un autre essuie-glace (non représenté).

La bielle 10 de transmission de mouvement comporte une extrémité (non représentée) qui est reliée à l'arbre de sortie par une manivelle qui est liée en rotation à l'arbre de sortie et qui porte un maneton d'orientation axiale auquel elle est liée en rotation. Le maneton est relié à la cette extrémité de la bielle 10 par une liaison du type à rotule de conception connue.

La bielle 10 comporte une autre extrémité 12 qui est reliée à un arbre d'entraînement 14 par une manivelle 16 qui est liée en rotation à l'arbre d'entraînement 14.

Cette manivelle 16 porte un maneton 18 d'orientation axiale, selon un axe vertical A auquel elle est liée en rotation.

Le maneton 18 est relié à l'extrémité 12 de la bielle 10 par une liaison du type à rotule de conception générale connue qui sera décrite plus avant en détails.

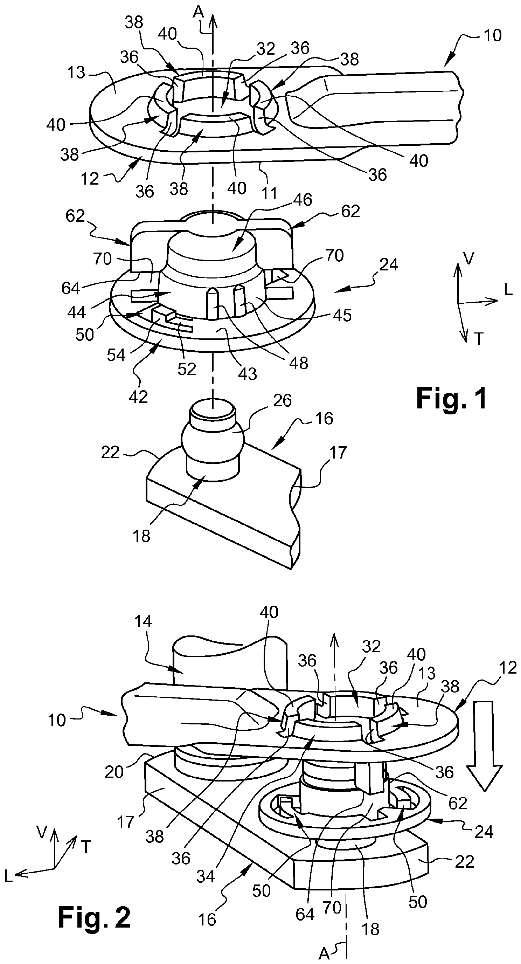

Comme illustré en détail aux figures 1 et 2, la manivelle 16 se présente sous la forme d'une plaque en tôle découpée et emboutie.

Au voisinage de son bord distal d'extrémité 20 et de manière centrée transversalement, la plaque 17 de la manivelle 16 comporte un trou de section carrée qui est conçu pour recevoir un tronçon axial inférieur de l'arbre d'entraînement 14 de section complémentaire qui y est fixé par exemple par sertissage.

Au voisinage de son bord proximal d'extrémité 22, et de manière centrée transversalement, la plaque 17 de la manivelle 16 comporte un trou de section par exemple carrée qui est conçu pour recevoir un tronçon axial inférieur complémentaire du maneton associé 18 de section complémentaire qui y est fixé par exemple par sertissage.

Le maneton 18, est un composant d'orientation axiale selon son axe central "A", qui correspond ici par convention à l'axe vertical du trièdre L, V, T et il est orienté du bas vers le haut.

Le maneton 18 comporte un tronçon supérieur 26 en forme d'une partie d'une rotule sphérique centrée sur l'axe A.

La bielle 10 et la manivelle 16 sont ici - par convention uniquement - représentées parallèles et globalement horizontales, et l'extrémité 12 de la bielle 10 est ici agencée verticalement au-dessus de l'extrémité 22 de la manivelle 16.

L'invention n'est pas limitée à cette disposition de l'extrémité 12 de la bielle 10 par rapport à l'extrémité 22 de la manivelle 16, et que l'extrémité 12 de la bielle 10 peut aussi être agencée verticalement au-dessous de l'extrémité 22 de la manivelle 16.

De même, compte tenu des facultés de mobilité de l'extrémité 12 de la bielle 10 par rapport au maneton 18, l'extrémité 12 de la bielle 10 est susceptible d'occuper différentes positions dans l'espace par rapport à la manivelle 16, et notamment des positions dans lesquelles l'extrémité 12 de la bielle 10 n'est pas parallèle à la manivelle 16.

L'extrémité 22 de la manivelle 16 est articulée par rapport à l'extrémité 12 de la bielle 10 par l'intermédiaire d'une liaison à rotule comportant une boîte à rotule 24 montée « à baïonnette » sur l'extrémité 12 de la bielle 10

L'extrémité 12 de la bielle 10 est ici réalisée sous la forme d'une plaque plane et qui s'étend horizontalement. Elle comporte un orifice de verrouillage 32 au travers duquel la boîte à rotule 24 est fixée à l'extrémité 12 de la bielle 10 par un montage du type dit à baïonnette.

La boîte à rotule 24, est une pièce réalisée par moulage en matière plastique pour permettre un emboîtement élastique de l'extrémité supérieure 26 du maneton 18 dans un logement sphérique concave 28 de la boîte à rotule 24.

Le logement 28 de la boîte à rotule 24 débouche axialement vers le bas, en direction de l'extrémité 22 de la manivelle 16 par une ouverture inférieure 30, au travers de laquelle l'extrémité supérieure en tronc de sphère 26 du maneton 18 est montée dans le logement creux sphérique concave 28.

Pour réaliser l'articulation de l'extrémité 12 de la bielle 10 avec l'extrémité 22 de la manivelle 10, l'extrémité supérieure 26 est de forme sphérique et le logement 28 de la boîte à rotule 24 est de forme sphérique concave complémentaire.

Le centre « C » du logement 28 définit un point central d'articulation de l'extrémité 12 la bielle 10 par rapport à la manivelle 16.

L'extrémité 12 en forme de plaque de la bielle 10 est délimitée par une face inférieure 11 et une face supérieure 13 opposées, planes et parallèles.

Pour le montage de la boîte à rotule 24, l'extrémité 12 de la bielle 10 comporte un trou central de verrouillage 32 qui est formé à la faveur d'une découpe et d'un embouti.

Le trou de verrouillage 32 s'étend ainsi à travers l'épaisseur de la tôle constitutive de l'extrémité 12 de la bielle 10 et il se prolonge verticalement vers le haut à la faveur d'une jupe axiale tubulaire emboutie 34 qui s'étend verticalement vers le haut au-dessus du plan de la face supérieure 13.

Ainsi, le trou de verrouillage 32 est sensiblement tronconique concave de section circulaire allant en diminuant en diamètre du bas vers le haut.

L'extrémité 12 de la bielle 10 comporte sur toute son épaisseur et sur celle de la jupe 34 quatre fentes radiales 36 ici réparties angulairement à angle droit autour de l'axe central A du trou de verrouillage 32.

Chaque fente radiale 36 est débouchante verticalement vers la bas te vers le haut et radialement à l'intérieur du trou de verrouillage 32.

Chaque fente radiale 36 s'étend aussi radialement au-delà du diamètre externe de l'embase de la jupe 34.

Chaque fente radiale 36 est à parois radiales verticales parallèles et opposées.

A la faveur des fentes radiales 36, la jupe 34 est divisée en quatre secteurs angulaires 38 dont chacun est ici susceptible, au sens de l'invention, de faire fonction d'ergot de verrouillage dans le montage à baïonnette mentionné précédemment.

Chaque ergot de verrouillage est délimité verticalement vers le haut par une face supérieure 40.

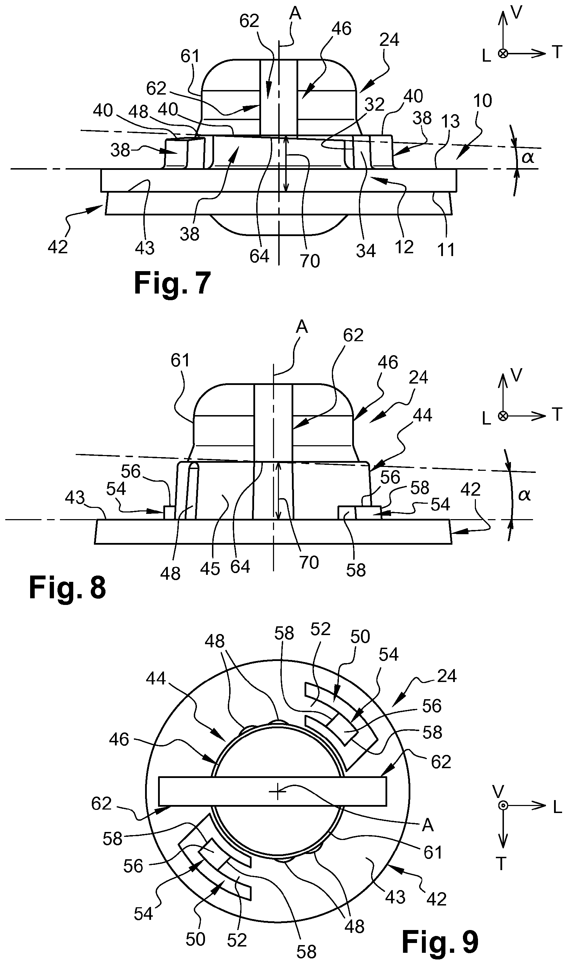

Chaque face supérieure 40 est sensiblement plane et elle est inclinée par rapport à la face supérieure horizontale plane 13 de l'extrémité 12 de la bielle 10 d'un angle alpha (Voir figure 7) de quelques degrés d'angle de manière à former une pente ou rampe de serrage axial comme cela sera expliqué par la suite.

Les faces supérieures des quatre ergots de verrouillage 38 sont inclinées dans le même sens autour de l'axe A.

La boîte à rotule 24 complémentaire de l'extrémité 12 de la bielle 10 comprend essentiellement une plaque annulaire inférieure 42, un tronçon intermédiaire 44, et un tronçon supérieur 46 de préhension pour l'entraînement en rotation de la boîte à rotule.

La plaque annulaire inférieure 42 est délimitée verticalement vers le haut par une face supérieure radiale annulaire 43 et elle comporte en son centre l'ouverture inférieure 30.

La plaque annulaire inférieure 42 comporte ici deux cliquets de blocage diamétralement opposés 50 qui sont réalisés venus de matière par moulage avec la boîte à rotule 24.

Chaque cliquet de blocage 50 comporte une patte déformable élastiquement 52 qui dans son état de repos s'étend dans le plan de la plaque annulaire inférieure 42 et qui, à son extrémité libre, porte un doigt de blocage 54 qui s'étend axialement en saillie, verticalement vers le haut au dessus du plan horizontal de la face supérieure radiale annulaire 43.

Chaque doigt de blocage est délimité verticalement vers le haut par une facette supérieure plane 56 et circonférentiellement par deux facettes verticales inclinées et opposées 58.

Chaque doigt de blocage 50 est dimensionné de manière à pouvoir être reçu verticalement, du bas vers le haut, dans une fente 36 qui joue alors le rôle d'une encoche de blocage au sens de l'invention.

Du fait de la conception à deux facettes inclinées 58, chaque doigt de blocage 50, lorsqu'il est emboîté élastiquement dans une fente 36, réalise un rattrapage des jeux angulaires, autour de l'axe A, entre la boîte à rotule 24 et l'extrémité 12 de la bielle 10.

Le tronçon intermédiaire 44 de la boîte à rotule 24 est délimité radialement par une paroi latérale convexe tronconique 45 dont le profil et les dimensions sont complémentaires de celles du trou de verrouillage 32 de l'extrémité 12 de la bielle 10.

La coopération des profils tronconiques complémentaires permet d'effectuer un rattrapage des jeux entre l'axe du tronçon intermédiaire 44 de la boîte à rotule 24 et l'axe du trou de verrouillage 32 de l'extrémité 12 de la bielle 10 pour les aligner selon un axe vertical commun A.

Pour rattraper les jeux radiaux au niveau de la coopération des profils tronconiques complémentaires, la surface externe de la paroi latérale convexe tronconique 45 peut être munie de nervures axiales externes 48.

Le tronçon supérieur 46 de préhension comporte un corps central creux 60 délimité par une paroi latérale externe 61 de plus petites dimensions que celles de la paroi latérale externe 45 du tronçon intermédiaire 44.

Le tronçon supérieur 46 de préhension comporte aussi deux ailes diamétralement opposées 62 qui s'étendent chacune radialement et verticalement à partir de la paroi latérale externe 61 du corps central creux 60.

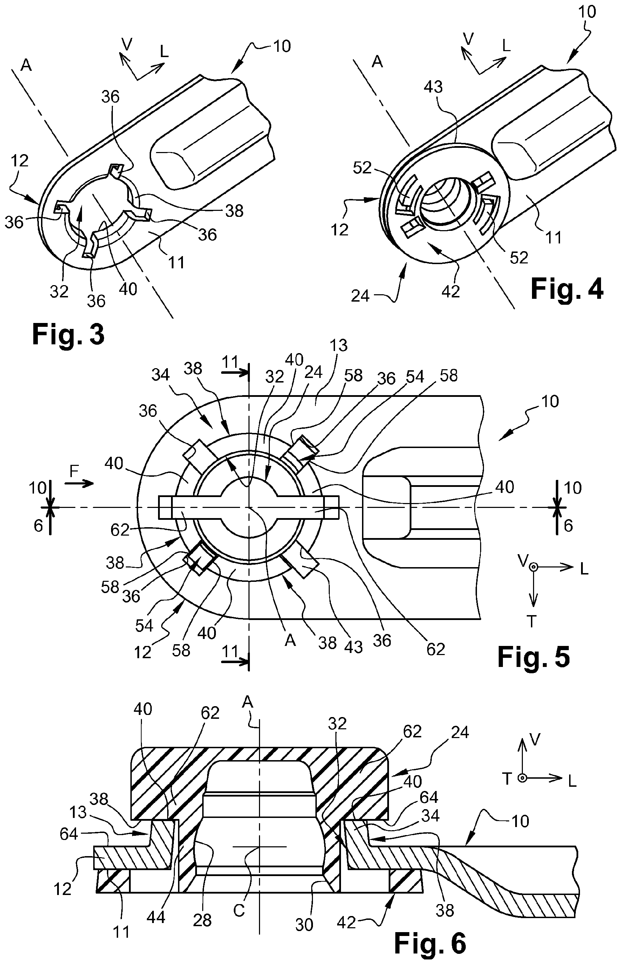

Comme on peut le voir aux figures 5 et 9, chaque doigt de blocage 54 est décalé angulairement de 45 degrés d'angle par rapport à une aile adjacente 62.

Chaque aile radiale 62 est délimitée verticalement vers le bas par une face inférieure sensiblement horizontale 64.

Chaque face inférieure 64 est sensiblement plane et elle est inclinée par rapport à la face supérieure horizontale plane 43 de la plaque annulaire inférieure 42 de la boîte à rotule 24 d'un angle alpha (Voir figure 8) de quelques degrés d'angle (égal ou sensiblement égal à l'angle alpha d'inclinaison de la face supérieure 40) de manière à former une pente ou rampe de serrage axial en coopération avec la surface 40 en vis-à-vis.

Au droit de chacune des ailes radiales 62, la boîte à rotule 24 délimite un cran de verrouillage 70.

Chaque cran de verrouillage 70 est délimité verticalement par une face inférieure 64 et par une portion en vis-à-vis de la face annulaire supérieure 43.

Pour l'assemblage et le montage des composants, et comme illustré à la figure 2, on peut par exemple commencer par emboîter élastiquement la boîte à rotule 24 sur la l'extrémité supérieure sphérique 26 du maneton 18 qui est alors reçue à rotation dans le logement sphérique concave 28 de la boîte à rotule 24.

Pour le montage à baïonnette de l'extrémité 12 de la bielle 10 sur la boîte à rotule 24, il faut, comme cela est illustré à la figure 2, aligner angulairement les deux ailes 62 avec deux fentes radiales diamétralement opposées 36.

Dans cette position angulaire relative, il est possible d'introduire axialement le tronçon supérieur 46 à travers l'orifice de verrouillage 32, puis le tronçon intermédiaire 44, jusqu'à la venue en butée et en contact de la face inférieure 11 de l'extrémité 12 de la bielle 10 contre la face annulaire supérieure 43 de la plaque annulaire inférieure 42 de la boîte à rotule 24.

Des portions en vis-à-vis de la face inférieure horizontale pleine 11 de l'extrémité 12 de la bielle 10 appuie sur les facettes supérieures 56 des doigts de blocage pour provoquer l'escamotage de ces derniers vers le bas par déformation élastique des pattes 52 des cliquets de blocage 50.

Une fois cette course "axiale" terminée, le montage à baïonnette se poursuit par rotation relative de l'extrémité 12 de la bielle 10, autour de l'axe vertical A, par rapport à la boîte à rotule.

Lors de cette rotation relative - ici d'environ 45 degrés d'angle - un ergot de verrouillage 38 pénètre angulairement dans un cran de verrouillage 70 adjacent jusqu'à ce que chaque doigt de blocage 54 pénètre élastiquement dans une fente radiale 36 qui fait alors fonction d'encoche de verrouillage.

Dans cette position angulaire relative illustrée à la figure 5, l'ensemble est monté, verrouillé et bloqué dans la position angulaire de verrouillage.

Lors de la rotation relative, les faces inclinées 40 et 64 à effet de rampe coopèrent entre elles pour assurer l'effet de serrage axial selon l'invention.

## Revendications

1. Ensemble appartenant à un mécanisme de transmission de mouvement pour l'entraînement en rotation d'un essuie-glace de véhicule automobile, cet ensemble comprenant un maneton (18), d'orientation axiale (A), qui comporte une rotule (26) d'articulation, et une bielle (10) qui porte une boîte à rotule (24) qui loge la rotule d'articulation, ensemble dans lequel la boîte à rotule et la bielle (10) sont assemblés par un montage à baïonnette, et dans lequel :
- la bielle (10) comporte un trou (32) de verrouillage qui est traversé axialement, de bas en haut, par un tronçon axial (44) de la boîte à rotule (24) ;
- la bielle (10) comporte au moins un ergot (38) de verrouillage ;
- la boîte à rotule (24) comporte un cran (70) de verrouillage qui est délimitée par deux faces radiales opposées (43, 64) ;
- la boîte à rotule (24) est verrouillée en position axiale par rapport à la bielle (10) par rotation relative de la boîte à rotule (24) par rapport à la bielle (10) par engagement dudit au moins un ergot (38) de verrouillage dans le cran (70) de verrouillage,
**caractérisé en ce que** une (64) des deux faces radiales opposées du cran (70) de verrouillage et une face en vis-à-vis (40) de l'ergot (38) de verrouillage présentent chacune un profil incliné (alpha) complémentaire pour, lors de ladite rotation, provoquer un serrage axial de l'ergot (38) de verrouillage à l'intérieur du cran (70) de verrouillage.

2. Ensemble selon la revendication 1, **caractérisé en ce que** la face latérale convexe (45) dudit tronçon axial (44) de la boîte à rotule (24) et la paroi interne concave du trou (32) de verrouillage présentent un profil tronconique complémentaire pour, lors dudit serrage axial, permettre un rattrapage des jeux entre l'axe dudit tronçon axial (44) de la boîte à rotule (24) et l'axe du trou (32) de verrouillage de la bielle (10).

3. Ensemble selon l'une des revendications 1 ou 2, **caractérisé en ce que**, dans une position angulaire dans laquelle ledit au moins un ergot (38) de verrouillage est engagé dans le cran (70) de verrouillage, la boîte à rotule (24) est bloquée en position angulaire par rapport à la bielle (10) par emboîtement élastique d'un doigt (54) de blocage dans une encoche (36) de blocage.

4. Ensemble selon la revendication 3, **caractérisé en ce que** le doigt de blocage (54) est porté par une patte (52) déformable élastiquement qui est reliée à la boîte à rotule (24), et **en ce que** l'encoche de blocage (36) est formée dans la bielle (10).

5. Ensemble selon l'une des revendications 3 ou 4, **caractérisé en ce que** le doigt de blocage (54) s'étend selon une direction parallèle à l'axe (A) de rotation de la boîte à rotule (24) par rapport à la bielle (10).

6. Ensemble selon l'une quelconque des revendications 3 à 5, **caractérisé en ce que** le doigt de blocage (54) et l'encoche de blocage (36) présentent un profil complémentaire pour, en position angulaire verrouillée de la boîte à rotule (24) par rapport à la bielle (10), réaliser un rattrapage des jeux angulaires entre ces deux éléments (10, 24).

7. Ensemble selon l'une quelconque des revendications précédentes, **caractérisé en ce que** la boîte à rotule (24) comporte un tronçon supérieur (46) de préhension pour l'entraînement en rotation de la boîte à rotule (24) par rapport à la bielle (10) qui comporte un corps central (60) et deux ailes radiales (64) qui s'étendent depuis le corps central (60).

8. Ensemble selon la revendication 7, **caractérisé en ce que** le contour latéral externe (61) du tronçon supérieur (46) de préhension de la boîte à rotule (24) est complémentaire du contour interne du trou (32) de verrouillage.

9. Ensemble selon la revendication 8, **caractérisé en ce que** la boîte à rotule (24) comporte une plaque annulaire inférieure (42) dont la face supérieure (43) constitue une des deux faces radiales opposées (43, 64) du cran (70) de verrouillage.

10. Ensemble selon la revendication 9, **caractérisé en ce que** le cran (70) de verrouillage est délimitée axialement :
- vers le bas par ladite face supérieure (43) de la plaque annulaire inférieure (42) de la boîte à rotule (24) ;
- et vers le haut par une face inférieure en vis-à-vis (64) du tronçon supérieur (46) de la boîte à rotule (24) constituée de deux portions angulaires dont chacune est la face inférieure (64) d'une aile radiale (62).

## Patentansprüche

1. Anordnung, welche zu einem Bewegungsübertragungsmechanismus zum Drehantrieb eines Kraftfahrzeugscheibenwischers gehört, wobei diese Anordnung einen Kurbelzapfen (18) mit axialer Ausrichtung (A), welcher eine Gelenkkugel (26) aufweist, und eine Koppelstange (10), welche ein Kugelgelenkgehäuse (24) trägt, welches die Gelenkkugel aufnimmt, umfasst, wobei in dieser Anordnung das Kugelgelenkgehäuse und die Koppelstange (10) durch eine Bajonettmontage zusammengebaut sind, und wobei:
- die Koppelstange (10) ein Verriegelungsloch (32) aufweist, welches axial, von unten nach oben, von einem axialen Abschnitt (44) des Kugelgelenkgehäuses (24) durchquert wird;
- die Koppelstange (10) wenigstens einen Verriegelungsvorsprung (38) aufweist;
- das Kugelgelenkgehäuse (24) eine Verriegelungsraste (70) aufweist, welche von zwei einander gegenüberliegenden radialen Seiten (43, 64) begrenzt wird;
- das Kugelgelenkgehäuse (24) in der axialen Position bezüglich der Koppelstange (10) durch relative Drehung des Kugelgelenkgehäuses (24) bezüglich der Koppelstange (10) durch Eingriff des wenigstens einen Verriegelungsvorsprungs (38) in die Verriegelungsraste (70) verriegelt wird,
**dadurch gekennzeichnet, dass** eine (64) der zwei einander gegenüberliegenden radialen Seiten der Verriegelungsraste (70) und eine gegenüberliegende Seite (40) des Verriegelungsvorsprungs (38) jeweils ein komplementäres geneigtes Profil (alpha) aufweisen, um bei der Drehung eine axiale Verspannung des Verriegelungsvorsprungs (38) im Inneren der Verriegelungsraste (70) hervorzurufen.

2. Anordnung nach Anspruch 1, **dadurch gekennzeichnet, dass** die konvexe Seitenfläche (45) des axialen Abschnitts (44) des Kugelgelenkgehäuses (24) und die konkave Innenwand des Verriegelungsloches (32) ein komplementäres kegelstumpfförmiges Profil aufweisen, um bei der axialen Verspannung einen Ausgleich des Spiels zwischen der Achse des axialen Abschnitts (44) des Kugelgelenkgehäuses (24) und der Achse des Verriegelungsloches (32) der Koppelstange (10) zu ermöglichen.

3. Anordnung nach einem der Ansprüche 1 oder 2, **dadurch gekennzeichnet, dass** in einer Winkelposition, in welcher der wenigstens eine Verriegelungsvorsprung (38) in die Verriegelungsraste (70) eingreift, das Kugelgelenkgehäuse (24) in der Winkelposition bezüglich der Koppelstange (10) durch elastisches Einpassen eines Sperrfingers (54) in eine Sperraussparung (36) arretiert ist.

4. Anordnung nach Anspruch 3, **dadurch gekennzeichnet, dass** der Sperrfinger (54) von einer elastisch verformbaren Lasche (52) getragen wird, welche mit dem Kugelgelenkgehäuse (24) verbunden ist, und dadurch, dass die Sperraussparung (36) in der Koppelstange (10) ausgebildet ist.

5. Anordnung nach einem der Ansprüche 3 oder 4, **dadurch gekennzeichnet, dass** sich der Sperrfinger (54) in einer Richtung erstreckt, die zur Drehachse (A) des Kugelgelenkgehäuses (24) bezüglich der Koppelstange (10) parallel ist.

6. Anordnung nach einem der Ansprüche 3 bis 5, **dadurch gekennzeichnet, dass** der Sperrfinger (54) und die Sperraussparung (36) ein komplementäres Profil aufweisen, um in der verriegelten Winkelposition des Kugelgelenkgehäuses (24) bezüglich der Koppelstange (10) eine Beseitigung des Winkelspiels zwischen diesen zwei Elementen (10, 24) durchzuführen.

7. Anordnung nach einem der vorhergehenden Ansprüche, **dadurch gekennzeichnet, dass** das Kugelgelenkgehäuse (24) einen oberen Greifabschnitt (46) zum Drehantrieb des Kugelgelenkgehäuses (24) bezüglich der Koppelstange (10) aufweist, welcher einen zentralen Körper (60) und zwei radiale Flügel (64), welche sich vom zentralen Körper (60) aus erstrecken, aufweist.

8. Anordnung nach Anspruch 7, **dadurch gekennzeichnet, dass** die seitliche Außenkontur (61) des oberen Greifabschnitts (46) des Kugelgelenkgehäuses (24) zur Innenkontur des Verriegelungsloches (32) komplementär ist.

9. Anordnung nach Anspruch 8, **dadurch gekennzeichnet, dass** das Kugelgelenkgehäuse (24) eine untere ringförmige Platte (42) aufweist, deren Oberseite (43) eine der zwei einander gegenüberliegenden radialen Seiten (43, 64) der Verriegelungsraste (70) bildet.

10. Anordnung nach Anspruch 9, **dadurch gekennzeichnet, dass** die Verriegelungsraste (70) axial begrenzt wird:
- nach unten durch die Oberseite (43) der unteren ringförmigen Platte (42) des Kugelgelenkgehäuses (24);
- und nach oben durch eine gegenüberliegende Unterseite (64) des oberen Abschnitts (46) des Kugelgelenkgehäuses (24), die aus zwei Winkelabschnitten besteht, von denen jeder die Unterseite (64) eines radialen Flügels (62) ist.

## Claims

1. An assembly belonging to a movement-transmission mechanism for driving the rotation of a motor vehicle wiper, this assembly comprising a crankpin (18), of axial orientation (A), which comprises a ball-joint ball (26), and a connecting rod (10) which bears a ball-joint housing (24) that houses the ball-joint ball, in which assembly the ball-joint housing and the connecting rod (10) are assembled by bayonet fitting, and wherein:
- the connecting rod (10) has a locking hole (32) through which there passes axially, from the bottom up, an axial section (44) of the ball-joint housing (24);
- the connecting rod (10) comprises at least one locking lug (38);
- the ball-joint housing (24) comprises a locking notch (70) which is delimited by two opposite radial faces (43, 64);
- the ball-joint housing (24) is locked in axial position with respect to the connecting rod (10) by relative rotation of the ball-joint housing (24) with respect to the connecting rod (10) by engaging said at least one locking lug (38) in the locking notch (70),
**characterized in that** one (64) of the two opposite radial faces of the locking notch (70) and a face (40) opposite belonging to the locking lug (38) each have inclined (alpha) profiles that complement one another so that, upon said rotation, the locking lug (38) becomes axially clamped inside the locking notch (70).

2. The assembly as claimed in claim 1, **characterized in that** the convex lateral face (45) of said axial section (44) of the ball-joint housing (24) and the concave internal wall of the locking hole (32) have frustoconical profiles that complement one another so as to absorb, upon said axial clamping, any clearance between the axis of said axial section (44) of the ball-joint housing (24) and the axis of the locking hole (32) in the connecting rod (10).

3. The assembly as claimed in one of claims 1 and 2, **characterized in that**, in an angular position in which said at least one locking lug (38) is engaged in the locking notch (70), the ball-joint housing (24) is blocked in terms of angular position with respect to the connecting rod (10) by the elastic push-fitting of a blocking finger (54) into a blocking recess (36).

4. The assembly as claimed in claim 3, **characterized in that** the blocking finger (54) is borne by an elastically deformable tab (52) which is connected to the ball-joint housing (24), and **in that** the blocking recess (36) is formed in the connecting rod (10).

5. The assembly as claimed in one of claims 3 and 4, **characterized in that** the blocking finger (54) extends in a direction parallel to the axis (A) of rotation of the ball-joint housing (24) with respect to the connecting rod (10).

6. The assembly as claimed in any one of claims 3 to 5, **characterized in that** the blocking finger (54) and the blocking recess (36) have profiles that complement one another so that when the ball-joint housing (24) is in the locked angular position with respect to the connecting rod (10), any angular clearance between these two elements (10, 24) is absorbed.

7. The assembly as claimed in any one of the preceding claims, **characterized in that** the ball-joint housing (24) comprises an upper section (46) for grasping so as to rotate the ball-joint housing (24) with respect to the connecting rod (10) which comprises a central body (60) and two radial wings (64) extending out from the central body (60).

8. The assembly as claimed in claim 7, **characterized in that** the external lateral contour (61) of the upper section (46) for grasping of the ball-joint housing (24) complements the internal contour of the locking hole (32).

9. The assembly as claimed in claim 8, **characterized in that** the ball-joint housing (24) comprises a lower annular plate (42) of which the upper face (43) constitutes one of the two opposite radial faces (43, 64) of the locking notch (70).

10. The assembly as claimed in claim 9, **characterized in that** the locking notch (70) is delimited axially:
- downward by said upper face (43) of the lower annular plate (42) of the ball-joint housing (24);
- and upward by a lower face (64) opposite, belonging to the upper section (46) of the ball-joint housing (24) consisting of two angular portions of which each is the lower face (64) of one radial wing (62).
